# FASCICULE DE BREVET EUROPEEN

(11) **EP 1 234 755 B1**
(45) Date de publication et mention de la délivrance du brevet: **21.12.2005**
(21) Numéro de dépôt: 02290303.3
(22) Date de dépôt: 07.02.2002
(51) Int. Cl.: B62D 47/00, B60R 5/04, B60P 3/42

(54) **Véhicule automobile transformable**
Umwandelbarer Personenkraftwagen
Transformable motor vehicle

(30) Priorité: 26.02.2001 FR 0102598
(43) Date de publication de la demande: 28.08.2002
(73) Titulaire: Peugeot Citroen Automobiles SA, 92200 Neuilly sur Seine (FR)
(72) Inventeur: Levitre, Gilles, 92230 Gennevilliers (FR); Cazes, Christophe, 75009 Paris (FR)
(74) Mandataire: Lanceplaine, Jean-Claude

(56) Documents cités:
- DE-A- 19 929 047
- FR-A- 1 238 438
- US-A- 2 997 336
- US-A- 3 419 304
- PATENT ABSTRACTS OF JAPAN vol. 011, no. 385 (M-651), 16 décembre 1987 (1987-12-16) & JP 62 155125 A (DAIHATSU MOTOR CO LTD), 10 juillet 1987 (1987-07-10)

## Description

La présente invention concerne un véhicule automobile de type break, transformable en un véhicule à benne ouverte vers le haut, appelé pick-up.

Les véhicules automobiles de type break comportent un habitacle ayant une partie avant contenant le poste de conduite du véhicule et au moins un siège avant et une partie arrière contenant au moins une rangée de sièges arrière escamotables de manière à constituer une partie d'un plancher plat s'étendant sur toute la partie arrière de l'habitacle du véhicule dans la position rabattue de ladite rangée de sièges arrière.

L'habitacle comporte, à son extrémité arrière, un ouvrant appelé hayon qui est généralement articulé à sa partie supérieure autour d'un axe transversal de telle manière que ce hayon puisse être déplacé entre une position abaissée de fermeture et une position relevée d'ouverture donnant accès, par l'arrière du véhicule, à la partie arrière de l'habitacle.

Ainsi, après avoir rabattu la rangée de sièges arrière, l'utilisateur dispose d'un volume de transport correspondant à l'ensemble de la partie arrière de l'habitacle accessible par l'ouverture dégagée lors du basculement vers le haut du hayon.

Les véhicules automobiles de type break permettent donc de transporter des charges volumineuses qui sont introduites dans le véhicule par l'ouverture arrière.

Toutefois, l'habitacle de ces véhicules est fermé par un toit, de sorte que l'espace de rangement et de transport à l'intérieur du véhicule est limité vers le haut.

De plus, ce type de véhicules automobiles comporte généralement deux parois délimitant latéralement la partie arrière de l'habitacle et qui comprennent des portes latérales arrière équipées de vitre dans leur partie supérieure et deux parties de carrosserie fixes ou custodes généralement équipées de vitre dans leur partie supérieure.

Les vitres des parties supérieures des parties latérales du véhicule, lorsque celui-ci est utilisé pour le transport d'objets volumineux, risquent d'être cassées, lors du chargement ou pendant le transport d'objets encombrants.

On connaît par ailleurs, des véhicules automobiles à benne ouverte vers le haut appelés pick-up qui comportent, à l'arrière d'une cabine constituée par la partie antérieure de l'habitacle du véhicule renfermant le poste de conduite, la benne ouverte vers le haut de forme générale parallélépipédique.

La benne ouverte de ce type de véhicules comporte un plancher, deux parois latérales dans la direction longitudinale du véhicule et une paroi d'extrémité arrière ouvrante située à l'opposé de la cabine.

De tels véhicules présentent des avantages en ce qui concerne leur capacité de chargement par rapport à un véhicule classique ou même par rapport à un véhicule de type break, puisque le niveau de chargement de la benne est pratiquement illimité du fait de l'absence d'un toit recouvrant la benne.

Toutefois, les véhicules de type pick-up ne peuvent être utilisés qu'à des fins utilitaires et seulement par le conducteur et éventuellement un passager, ce qui limite leur intérêt dans le cas de leur utilisation par des particuliers.

En outre, ces véhicules sont difficilement utilisables sur de long parcours routier ou autoroutier.

On connaît par le document DE-A-19929047 en accord avec le préambule de la revendication 1 un véhicule automobile découvrable et dont le pavillon est formé par une partie fixe et par deux parties amovibles. Les deux parties amovibles peuvent être retirées du toit et placées dans un compartiment aménagé dans le coffre.

On connaît également du document FR-A-1 238 438, un véhicule automobile équipé d'un hayon dont une partie supérieure formant une vitre arrière est escamotable de manière coulissante à l'intérieur d'une partie inférieure du hayon.

L'invention a pour but de proposer un véhicule automobile utilisable aussi bien pour le transport de charges que pour le transport de passagers et qui est facilement transformable par des moyens simples et économiques afin de cumuler les avantages des véhicules automobiles de type break et de type pick-up.

L'invention a donc pour objet un véhicule automobile de type break transformable en un véhicule à benne ouverte vers le haut appelé pick-up, et comportant un habitacle ayant une partie avant contenant un poste de conduite et au moins un siège avant et une partie arrière comportant au moins une rangée de sièges arrière comportant au moins une assise et un dossier déplaçables entre une position d'utilisation et une position escamotée dans laquelle ladite assise est basculée sensiblement verticalement derrière ledit siège avant et ledit dossier est basculé vers l'avant du véhicule dans le prolongement du plancher, ledit habitacle étant délimité par un plancher, deux parois latérales, un pavillon couvrant l'ensemble de l'habitable et, à sa partie postérieure, par un hayon pivotant et comportant une partie supérieure formant une vitre arrière escamotable de manière coulissante à l'intérieur d'une partie inférieure de hayon, caractérisé en ce que le pavillon comporte, successivement dans une direction longitudinale du véhicule et de l'avant vers l'arrière :
- une partie fixe,
- une première partie mobile déplaçable entre une position sensiblement horizontale dans le prolongement de la partie fixe et une position escamotée sensiblement verticale dans le prolongement de ladite assise en position escamotée et dans la configuration à benne ouverte du véhicule, et
- une seconde partie mobile déplaçable entre une position sensiblement horizontale dans le prolongement de la partie fixe et une position escamotée au-dessus de ladite partie fixe dans la configuration à benne ouverte du véhicule.

Selon d'autres modes particuliers de réalisation de l'invention :
- la seconde partie mobile située à l'arrière du pavillon est déplaçable par translation au moyen de mécanismes de coulissement entre la position prolongeant la partie fixe et la première partie mobile et la position escamotée située au-dessus de ladite partie fixe,
- les mécanismes de coulissement de la seconde partie mobile sont dissimulés dans des barres de toit fixées sur les bords latéraux du pavillon,
- la seconde partie mobile est formée par un cadre comportant une ouverture munie d'une vitre déplaçable, dans la configuration break du véhicule, entre une position ouverte et une position fermée,
- la première partie mobile du pavillon est formée par une vitre montée pivotante, par une extrémité antérieure, autour d'un axe horizontal de direction transversale et situé à l'aplomb de l'assise de la rangée de sièges arrière dans sa position escamotée,
- la vitre forme, dans la position sensiblement verticale de la première partie mobile, un organe de séparation entre la partie avant de l'habitacle et la partie arrière dudit habitacle,
- le bord antérieur de la vitre coopère avec un joint d'étanchéité respectivement dans la position prolongeant la partie fixe du pavillon et dans la position sensiblement verticale,
- les bords latéraux et le bord inférieur de la vitre coopèrent avec des joints d'étanchéité fixés sur les parois latérales de l'habitacle et le bord arrière de l'assise de la rangée de sièges arrière.

D'autres caractéristiques et avantages de l'invention apparaîtront au cours de la description qui va suivre, donnée à titre d'exemple et faite en se référant aux dessins annexés, sur lesquels :
- la Fig. 1 est une vue en perspective, de trois quarts arrière, d'un véhicule automobile dans sa première configuration ou configuration break,
- la Fig. 2 est une vue en perspective, de trois quarts arrière, du véhicule automobile dans sa seconde configuration à benne ouverte vers le haut ou configuration pick-up,
- les Figs. 3 et 4 sont des vues schématiques en coupe longitudinale de l'habitacle respectivement dans la configuration break et dans la configuration pick-up,
- la Fig. 5 est une demi-vue en coupe transversale du pavillon du véhicule automobile,
- la Fig. 6 est une vue partielle en coupe longitudinale du pavillon du véhicule automobile,
- les Figs. 7 et 8 sont des vues schématiques et partielles des éléments d'étanchéité entre la première partie mobile et la partie fixe du pavillon du véhicule automobile.

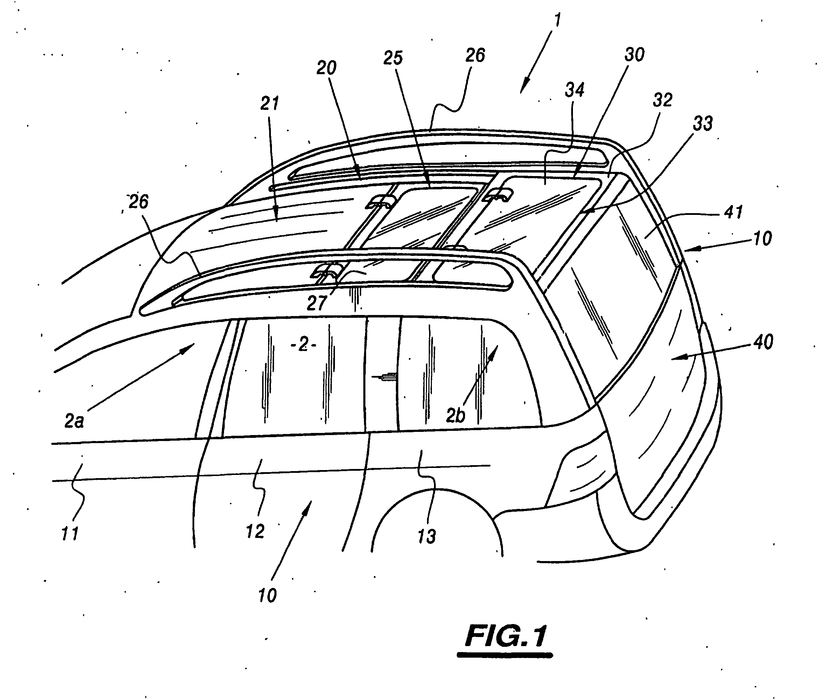

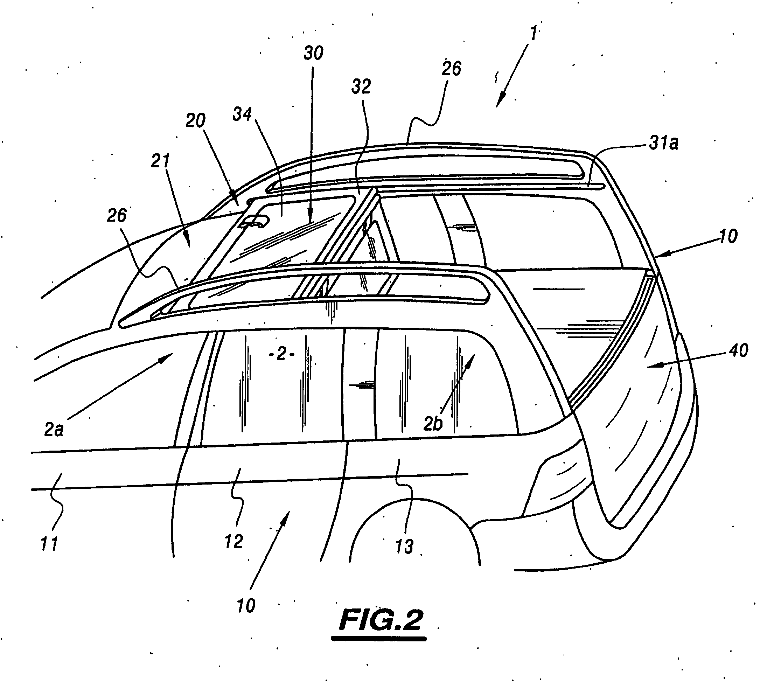

Sur les Figs. 1 et 2, on a représenté schématiquement un véhicule automobile suivant l'invention, de type break, désigné de manière générale par la référence 1.

Le véhicule automobile 1 comporte une carrosserie délimitant un habitacle 2, dont la partie avant 2a renferme un poste de conduite du véhicule et au moins un siège avant 3 utilisé par le conducteur du véhicule.

Généralement, le véhicule comporte deux sièges avant, un siège passager étant disposé à côté du siège du conducteur.

L'habitacle 2 comporte également une partie arrière 2b dans laquelle est disposée une rangée de sièges arrière 4 constituée, dans l'exemple de réalisation représenté sur les figures, par une banquette comprenant une assise 4a et un dossier 4b. La rangée de sièges arrière 4 peut également être constituée par deux ou trois sièges indépendants.

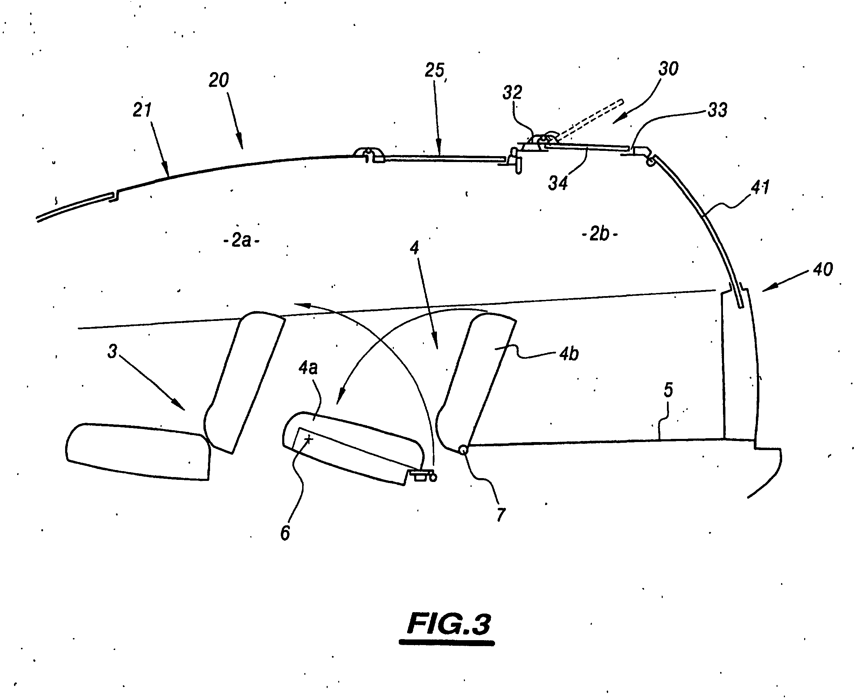

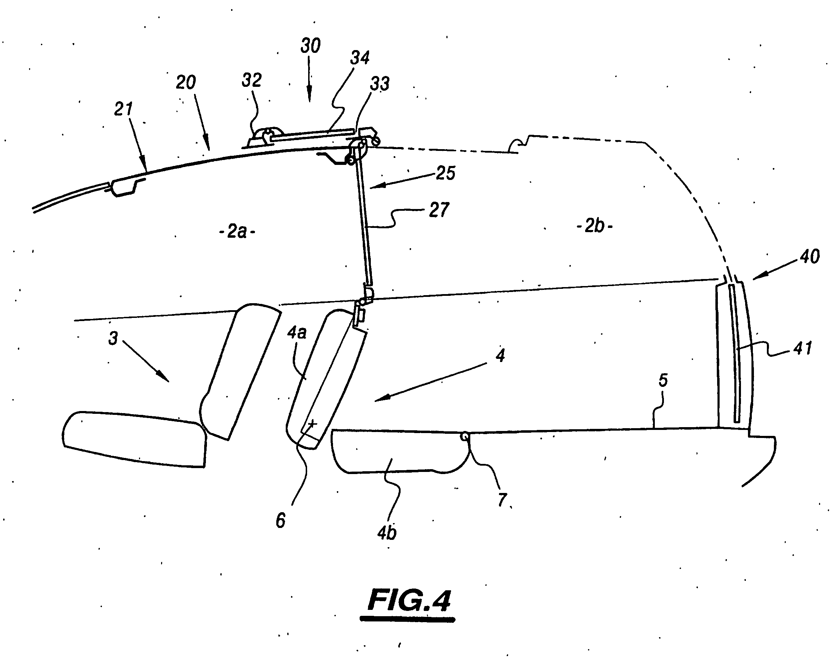

La partie arrière 2b de la l'habitacle 2 est délimitée par un plancher 5 (Fig. 3 et 4), deux parois latérales 10, un pavillon 20 couvrant l'ensemble de l'habitacle 2 et, à sa partie postérieure, par un hayon 40.

Ainsi que représenté sur les Figs. 3 et 4, l'assise 4a et le dossier 4b de la rangée de sièges arrière 4 sont déplaçables entre une position d'utilisation (Fig. 3) et une position escamotée (Fig. 4).

Pour cela, l'assise 4a est articulée à sa partie antérieure, sur le plancher 5 du véhicule automobile, au moyen d'un axe 6 s'étendant transversalement par rapport à la direction longitudinale du véhicule. De même, le dossier 4b est articulé, à sa partie inférieure, sur le plancher 5 du véhicule automobile au moyen d'un axe 7 s'étendant transversalement par rapport à ladite direction longitudinale.

Dans la position escamotée de la rangée de sièges arrière 4, comme représentée à la Fig. 4, l'assise 4a est basculée sensiblement verticalement derrière le siège avant 3 et le dossier 4b est basculé vers l'avant du véhicule dans le prolongement du plancher 5 de façon à constituer une partie de la surface du plancher plat de l'habitacle 2, notamment pour le transport d'objets volumineux.

Chaque paroi latérale 10 est formée, de l'avant jusqu'à l'arrière du véhicule automobile 1, par une porte avant 11, une porte arrière 12 et une custode 13 comportant une vitre dé custode dans sa partie supérieure.

Le pavillon 20 comporte, successivement dans une direction longitudinale du véhicule et de l'avant vers l'arrière, une partie fixe 21, opaque, qui peut être constituée par une tôle et, à l'arrière du dossier du siège avant 3, une première partie mobile 25 et une seconde partie mobile 30.

Ces deux parties mobiles 25 et 30 sont déplaçables entre une position sensiblement horizontale dans le prolongement de la partie fixe 21, comme représentée à la Fig. 1, et une position escamotée dans la configuration à benne ouverte du véhicule automobile de façon à libérer le haut de la partie arrière de l'habitacle 2, comme représentée à la Fig. 2.

Ainsi, dans la configuration break représentée à la Fig. 3, la rangée de sièges arrière 4 est en position d'utilisation et les parties mobiles 25 et 30 du pavillon 20 sont disposées sensiblement dans le prolongement de la partie fixe 21 de façon à fermer le haut de la partie arrière 2b de l'habitacle 2.

Dans la configuration pick-up représentée à la Fig. 4, la rangée de sièges arrière 4 est en position escamotée afin de former un plancher 5 de chargement plat et de grande surface et les parties mobiles 25 et 30 du pavillon 20 sont également en position escamotée de façon à laisser libre le haut de la partie arrière 2b dudit habitacle 2.

A cet effet, la seconde partie mobile 30 située à l'arrière du pavillon 1 est déplaçable par translation au moyen de mécanismes de coulissement entre la position prolongeant la première partie mobile 25 et la position escamotée située au-dessus de la partie fixe 21.

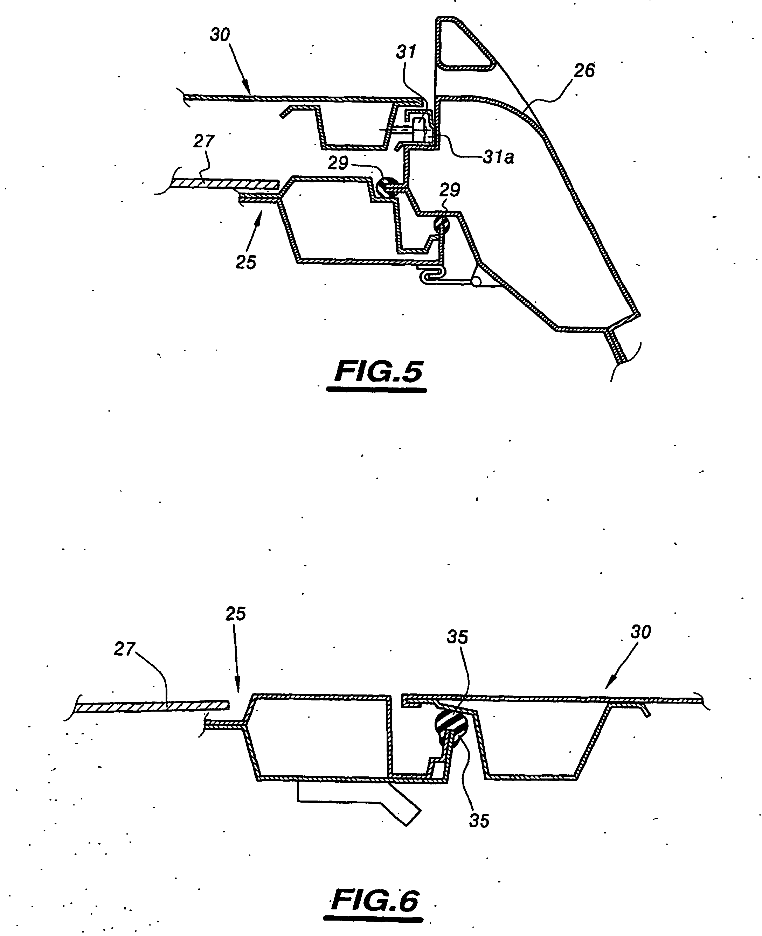

Ainsi que représenté sur les Figs. 2 et 5, les mécanismes de coulissement de la seconde partie mobile 30 sont dissimulés dans des barres de toit 26 fixées sur les bords latéraux du pavillon 20 et ces mécanismes de coulissement sont formés par exemple par des galets 31 disposés sur les bords latéraux de la seconde partie mobile 40 et coopérant avec des glissières 31a ménagées dans les barres de toit 26.

Ces glissières 31 a s'étendent de la partie arrière 2b de l'habitacle 2 jusqu'à la partie avant 2a et sont disposées au-dessus de la première partie mobile 25 et de la partie fixe 21 du pavillon de façon à permettre la translation de la seconde partie mobile 30 au-dessus de ladite partie fixe 21.

La seconde partie mobile 30 est formée par un cadre 32 comportant une ouverture 33 munie d'une vitre 34 déplaçable dans la configuration break du véhicule automobile entre une position fermée représentée en trait plein à la Fig. 3 et une position ouverte représentée en pointillés sur cette Fig. 3, permettant ainsi de pouvoir transporter des objets de rande longueur et s'étendant à travers l'ouverture 33 dans la configuration de type break du véhicule automobile.

La seconde partie mobile 30 du pavillon 20 est pourvue à sa périphérie d'éléments d'étanchéité, non représentés, avec les parties adjacentes de la carrosserie du véhicule automobile.

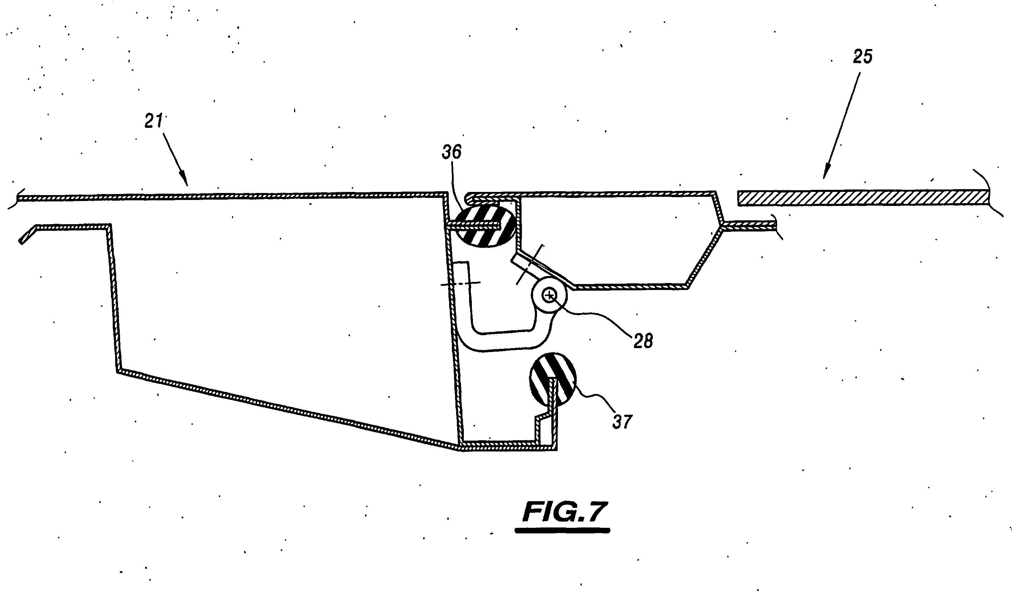

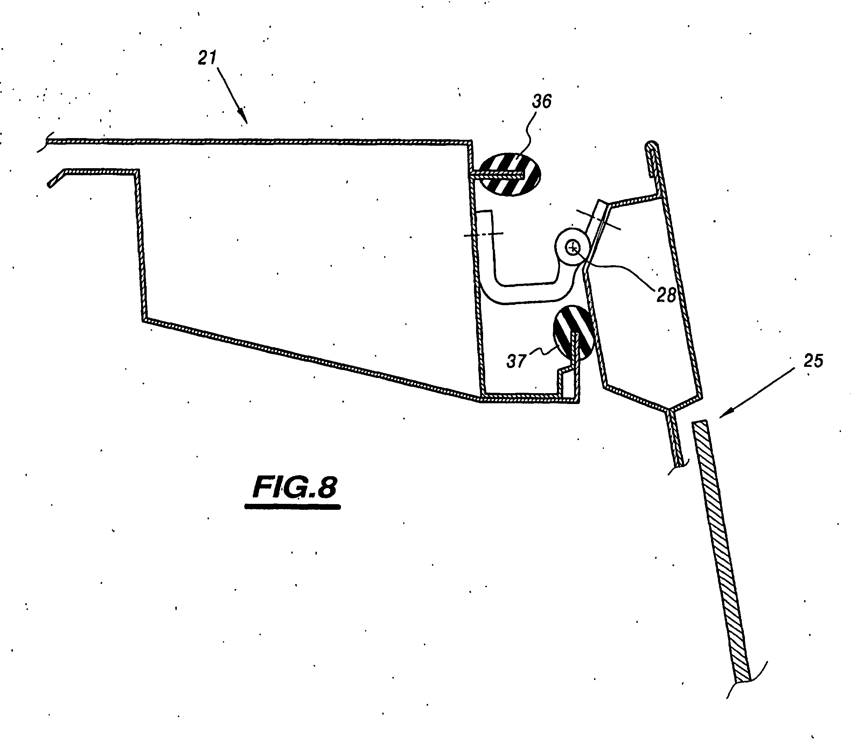

La première partie mobile 25 du pavillon 20 est formée par une vitre 27 montée pivotante par une extrémité antérieure autour d'un axe horizontal 28 (Figs. 7 et 8) de direction transversale et situé à l'aplomb de l'assise 4a de la rangée de sièges arrière 4 dans sa position escamotée.

La vitre 27 est déplaçable entre la position prolongeant la partie fixe 21 du pavillon 20, comme montrée sur les figures 1 et 3, et une position sensiblement verticale dans le prolongement de ladite assise 4a en position escamotée, comme représentée sur les Figs. 2 et 4.

Dans la position rabattue, la vitre 27 constitue la lunette arrière de l'habitacle 2, notamment dans le cas où le véhicule automobile 1 est en configuration à benne ouverte.

Afin d'assurer l'étanchéité entre l'habitacle 2 et l'extérieur du véhicule automobile, le bord postérieur de la vitre 27 comporte un joint d'étanchéité 35 coopérant avec le bord antérieur du cadre 32 de la seconde partie mobile 30 dans la position sensiblement horizontale des parties mobiles 25 et 30, comme représenté à la Fig. 6.

De même, lé bord antérieur de la vitre 27 de la première partie mobile 25 coopère, dans sa position sensiblement horizontale, avec un joint d'étanchéité 36 porté par la partie fixe 21 du pavillon 20 (Fig. 7) et, dans sa position sensiblement verticale, avec un joint d'étanchéité 37 également porté par ladite partie fixe 21 (Fig. 8).

Dans la position sensiblement horizontale de la vitre 27 de la première partie mobile, les bords latéraux de cette vitre 27 coopèrent avec des joints d'étanchéité 29 portés par les éléments adjacents de la carrosserie (Fig. 5) et, dans la position sensiblement verticale de ladite vitre 27, les bords latéraux de cette vitre 27 coopèrent avec des joints d'étanchéité, non représentés, portés par les parois latérales 10 du véhicule automobile et le bord postérieur de la vitre 27 coopère avec un joint d'étanchéité, non représenté, porté par le bord arrière de l'assise 4a de la rangée de sièges arrière 4, dans sa position escamotée.

Le hayon 40 disposée à l'arrière du véhicule automobile 1 de façon à constituer une cinquième porte, est monté pivotant, à sa partie inférieure, sur la carrosserie autour d'un axe d'articulation horizontal, non représenté, s'étendant transversalement par rapport à la direction longitudinale de ce véhicule.

Ainsi, ce hayon 40 est déplaçable par pivotement entre une position sensiblement verticale assurant, l'obturation de la partie arrière du véhicule automobile et une position sensiblement horizontale dans le prolongement du plancher 5 de façon à augmenter la surface de chargement de ce plancher 5.

De plus, le hayon 40 comporte, dans sa partie supérieure une vitre 41 constituant la lunette arrière du véhicule dans la configuration de type break. Cette vitre 41 est escamotable de manière coulissante à l'intérieur de la partie inférieure du hayon 40.

Dans la configuration break du véhicule automobile, la rangée de sièges arrière 4 peut être placée en position d'utilisation ou en position escamotée.

Dans cette configuration, les parties mobiles 25 et 30 du pavillon 20 sont placées dans le prolongement de la partie fixe 21 de façon à fermer le haut de la partie arrière 2b de l'habitacle 2 et le hayon 40 est fermé. La vitre coulissante 41 de ce hayon 40 est déployée de façon à constituer la lunette arrière du véhicule automobile.

Dans la configuration de type pick-up du véhicule automobile, la seconde partie mobile 30 du pavillon 20 est escamotée par coulissement au-dessus de la partie fixe 21 et la première partie mobile 25 est escamotée par basculement dans une position sensiblement verticale en prolongement de l'assise 4a de la rangée de sièges arrière 4 placée dans sa position escamotée, c'est à dire sensiblement verticalement derrière le siège avant 3.

La vitre coulissante 41 du hayon 40 est escamotée dans la partie inférieure dudit hayon 40 et le hayon 40 peut être placé dans une position sensiblement horizontale de façon à prolonger le plancher 5 et à augmenter la surface de chargement du véhicule automobile.

Le véhicule automobile selon l'invention permet de passer facilement d'une configuration break à une configuration pick-up de telle sorte que ce véhicule puisse servir aussi bien pour le transport de passagers ou de charges dans un habitacle entièrement fermé, que pour le transport de charges dans une benne ouverte vers le haut et facilement accessible par l'arrière.

Le véhicule automobile selon l'invention est particulièrement économique du fait de sa polyvalence et peut éviter l'achat d'un second véhicule, pour un utilisateur désirant effectuer des transports sur route à grande distance, de charges ou de passagers, dans de bonnes conditions de confort et de protection climatique, et des transports purement utilitaires de charges volumineuses, dans une utilisation locale.

## Revendications

1. Véhicule automobile de type break transformable en un véhicule à benne ouverte vers le haut appelé pick-up, et comportant un habitacle (2) ayant une partie avant (2a) contenant un poste de conduite et au moins un siège avant (3) et une partie arrière (2b) comportant au moins une rangée de sièges arrière (4) comportant au moins une assise (4a) et un dossier (4b), ledit habitacle (2b) étant délimité par un plancher (5), deux parois latérales (10) et un pavillon (20) couvrant l'ensemble de l'habitable (2) **caractérisé en ce que** ladite assise et ledit dossier sont déplaçables entre une position d'utilisation et une position escamotée dans laquelle ladite assise (4a) est basculée sensiblement verticalement derrière ledit siège avant (3) et ledit dossier (4b) est basculé vers l'avant du véhicule dans le prolongement du plancher (5), l'habitacle étant délimité à sa partie postérieure, par un hayon (40) pivotant et comportant une partie supérieure formant une vitre arrière (41) escamotable de manière coulissante à l'intérieur d'une partie inférieure de hayon (40), le pavillon (20) comportant, successivement dans une direction longitudinale du véhicule et de l'avant vers l'arrière :
- une partie fixe (21),
- une première partie mobile (25) déplaçable entre une position sensiblement horizontale dans le prolongement de la partie fixe (21) et une position escamotée sensiblement verticale dans le prolongement de ladite assise (4a) en position escamotée et dans la configuration à benne ouverte du véhicule, et
- une seconde partie mobile (30) déplaçable entre une position sensiblement horizontale dans le prolongement de la partie fixe (21) et une position escamotée au-dessus de ladite partie fixe (21) dans la configuration à benne ouverte du véhicule.

2. Véhicule automobile selon la revendication 1, **caractérisé en ce que** la seconde partie mobile (30) située à l'arrière du pavillon (20) est déplaçable par translation au moyen de mécanismes de coulissement entre la position prolongeant la partie fixe (21) et la première partie mobile (25) et la position escamotée située au-dessus de ladite partie fixe (21).

3. Véhicule automobile selon la revendication 2, **caractérisé en ce que** les mécanismes de coulissement de la seconde partie mobile (30) sont dissimulés dans les barres de toit (26) fixées sur les bords latéraux du pavillon (20).

4. Véhicule automobile selon la revendication 2 ou 3, **caractérisé en ce que** la seconde partie mobile (30) est formée par un cadre (32) comportant une ouverture (33) munie d'une vitre (34) déplaçable, dans la configuration break du véhicule, entre une position ouverte et une position fermée.

5. Véhicule automobile selon l'une quelconque des revendications précédentes, **caractérisé en ce que** la première partie mobile (25) du pavillon (20) est formée par une vitre (27) montée pivotante par une extrémité antérieure, autour d'un axe horizontal (28) de direction transversale et situé à l'aplomb de l'assise (4a) de la rangée de sièges arrière (4) dans sa position escamotée.

6. Véhicule automobile selon la revendication 5, **caractérisé en ce que** la vitre (27) forme, dans la position sensiblement verticale de la première partie mobile (25), un organe de séparation entre la partie avant (2a) de l'habitacle (2) et la partie arrière (2b) dudit habitacle.

7. Véhicule automobile selon la revendication 5 ou 6, **caractérisé en ce que** le bord antérieur de la vitre (27) coopère avec un joint d'étanchéité (36; 37) respectivement dans la position prolongeant la partie fixe (21) du pavillon (20) et dans la position sensiblement verticale.

8. Véhicule automobile selon l'une quelconque des revendications 5 à 7, **caractérisé en ce que** les bords latéraux et le bord inférieur de la vitre (27) coopèrent avec des joints d'étanchéité fixés sur les parois latérales (10) de l'habitacle (2) et le bord arrière de l'assise (4a) de la rangée de sièges arrière (4).

## Patentansprüche

1. Kraftfahrzeug vom Typ Kombi, das in ein Pick-Up genanntes Fahrzeug mit nach oben offenem Wagenkasten umgewandelt werden kann, umfassend ein Karosseriegehäuse (2) mit einem vorderen Teil (2a), der den Fahrerplatz und mindestens einen Vordersitz (3) enthält, und einem hinteren Teil (2b), der mindestens eine Rücksitzreihe (4) mit mindestens einer Sitzfläche (4a) und einer Rückenlehne (4b) umfasst, **dadurch gekennzeichnet, dass** die Sitzfläche und die Rückenlehne zwischen einer Verwendungsstellung und einer eingeklappten Stellung beweglich sind, in der die Sitzfläche (4a) im wesentlichen vertikal hinter den vordersitz (3) geklappt ist und die Rückenlehne (4b) auf den vorderen Fahrzeugteil zu in die Verlängerung des Bodens (5) geklappt ist, und das Karosseriegenäuse (2b) durch einen Boden (5), zwei Seitenwände (10) und ein Dach (20) begrenzt ist, das das ganze Karosseriegehäuse (2) bedeckt, wobei das Karosseriegehäuse in seinem hinteren Teil durch eine verschwenkbare Klappe (40) begrenzt ist, die einen eine Heckscheibe (41) bildenden oberen Teil umfasst, der durch Verschieben in das Inneren eines unteren Klappenteils (40) versenkbar ist, wobei das Dach (20) in einer Längsrichtung des Fahrzeugs von vorne nach hinten nacheinander folgendes umfasst:
- einen feststehenden Teil (21),
- einen ersten beweglichen Teil (25), der zwischen einer im wesentlichen horizontalen Stellung in der Verlängerung des feststehenden Teils (21) und einer im wesentlichen vertikalen eingeklappten Stellung in der Verlängerung der Sitzfläche (4a) in eingeklappter Stellung und in der Fahrzeugkonfiguration offener Wagenkasten beweglich ist, und
- einen zweiten beweglichen Teil (30), der zwischen einer im wesentlichen horizontalen Stellung in der Verlängerung des feststehenden Teils (21) und einer eingeklappten Stellung über dem feststehenden Teil (21) in der Fahrzeugkonfiguration offener Wagenkasten beweglich ist.

2. Kraftfahrzeug nach Anspruch 1, **dadurch gekennzeichnet, dass** der im hinteren Teil des Dachs (20) gelegene zweite bewegliche Teil (30) mit Hilfe eines Schiebemechanismus zwischen der Stellung in der Verlängerung des feststehenden Teils (21) und des ersten beweglichen Teils (25) und der über dem feststehenden Teil (21) gelegenen eingeklappten Stellung translationsbeweglich ist.

3. Kraftfahrzeug nach Anspruch 2, **dadurch gekennzeichnet, dass** die Schiebemechanismen des zweiten beweglichen Teils (30) in den an den Seitenrändern des Dachs (20) befestigten Dachbalken (26) versteckt sind.

4. Kraftfahrzeug nach Anspruch 2 oder 3, **dadurch gekennzeichnet, dass** der zweite bewegliche Teil (30) von einem Rahmen (32) gebildet ist, der eine Öffnung (33) aufweist, die mit einer Glasscheibe (34) versehen ist, die in der Fahrzeugkonfiguration Kombi zwischen einer offenen Stellung und einer geschlossenen Stellung verschiebbar ist.

5. Kraftfahrzeug nach einem der vorhergehenden Ansprüche, **dadurch gekennzeichnet, dass** der erste bewegliche Teil (25) des Dachs (20) von einer Glasscheibe (27) gebildet ist, die an einem vorderen Ende um eine quer gerichtete horizontale Achse (28) verschwenkbar ist, die senkrecht über der Sitzfläche (4a) der Rücksitzreihe (4) in ihrer eingeklappten Stellung gelegen ist.

6. Kraftfahrzeug nach Anspruch 5, **dadurch gekennzeichnet, dass** die Glasscheibe (27) in der im wesentlichen vertikalen Stellung des ersten beweglichen Teils (25) ein Trennorgan zwischen dem vorderen Teil (2a) des Karosseriegehäuses (2) und dem hinteren Teil (2b) des Karosseriegehäuses bildet.

7. Kraftfahrzeug nach Anspruch 5 oder 6, **dadurch gekennzeichnet, dass** der vordere Rand der Glasscheibe (27) in der den feststehenden Teil (21) des Dachs (20) verlängernden Stellung bzw. in der im wesentlichen vertikalen Stellung mit einer Dichtung (36; 37) zusammenarbeitet.

8. Kraftfahrzeug nach einem der Ansprüche 5 bis 7, **dadurch gekennzeichnet, dass** die Seitenränder und der untere Rand der Glasscheibe (27) mit Dichtungen zusammenwirken, die an den Seitenwänden (10) des Karosseriegehäuses (2) und dem hinteren Rand der Sitzfläche (4a) der Rücksitzreihe (4) befestigt sind.

## Claims

1. A motor vehicle of the estate car type adapted to be converted into a motor vehicle of the pickup type and including a passenger compartment (2) having a front portion (2a) containing a driver station and at least one front seat (3) and a rear portion (2b) including at least one row of rear seats (4) including at least one seat cushion (4a) and one seat squab (4b), said passenger compartment (2b) being delimited by a floor (5), two lateral walls (10) and a roof (20) covering the whole of the passenger compartment (2), **characterised in that** said seat cushion and said seat squab are movable between a position of use and a retracted position in which said seat cushion (4a) is tipped up substantially vertically behind said front seat (3) and said seat squab (4b) is tilted toward the front of the vehicle in line with the floor (5), the passenger compartment being delimited at the rear by a pivoting hatch (40) having an upper portion forming a rear window (41) slidingly retractable into a lower portion of the hatch (40), the roof (20) including, successively in a longitudinal direction of the vehicle from the front toward the rear
- a fixed portion (21),
- a first mobile portion (25) movable between a substantially horizontal position in line with the fixed portion (21) and a substantially vertical retracted position in line with said seat cushion (4a) in the retracted position and in the pickup configuration of the vehicle, and
- a second mobile portion (30) movable between a substantially horizontal position in line with the fixed portion (21) and a retracted position above said fixed portion (21) in the pickup configuration of the vehicle.

2. A motor vehicle according to claim 1, **characterised in that** the second mobile portion (30) at the rear of the roof (20) is movable in translation by sliding mechanisms between the position in line with the fixed portion (21) and the first mobile portion (25) and the retracted position above said fixed portion (21).

3. A motor vehicle according to claim 2, **characterised in that** the sliding mechanisms of the second mobile portion (30) are concealed in roof bars (26) fixed to the lateral edges of the roof (20).

4. A motor vehicle according to claim 2 or claim 3, **characterised in that** the second mobile portion (30) is formed by a frame (32) including an opening (33) fitted with a sunroof (34) movable, in the estate car configuration of the vehicle, between an open position and a closed position.

5. A motor vehicle according to any one of the preceding claims, **characterised in that** the first mobile portion (25) of the roof (20) is formed by a sunroof (27) mounted to pivot at an anterior edge about a transverse horizontal axis (28) vertically aligned with the seat cushion (4a) of the row of rear seats (4) in its retracted position.

6. A motor vehicle according to claim 5, **characterised in that** the sunroof (27) forms, in the substantially vertical position of the first mobile portion (25), a separating member between the front portion (2a) of the passenger compartment (2) and the rear portion (2b) of said passenger compartment.

7. A motor vehicle according to claim 5 or claim 6, **characterised in that** the anterior edge of the sunroof (27) co-operates with a seal (36; 37) respectively in the position in line with the fixed portion (21) of the roof (20) and in the substantially vertical position.

8. A motor vehicle according to any one of claims 5 to 7, **characterised in that** the lateral edges and the lower edge of the sunroof (27) cooperate with seals fixed to the lateral walls (10) of the passenger compartment (2) and the rear edge of the seat cushion (4a) of the row of rear seats (4).
